# FASCICULE DE BREVET EUROPEEN

(11) **EP 2 999 864 B1**
(45) Date de publication et mention de la délivrance du brevet: **06.06.2018**
(21) Numéro de dépôt: 14725119.3
(22) Date de dépôt: 15.05.2014
(51) Int. Cl.: F28D 7/16, F02B 29/04, F28F 9/02, F28D 20/02

(54) **REFROIDISSEUR D'AIR DE SURALIMENTATION ET CIRCUIT D'AIR DE SURALIMENTATION ASSOCIE**
LADELUFTKÜHLER UND ZUGEHÖRIGER LADELUFTKREISLAUF
CHARGE AIR COOLER AND ASSOCIATED CHARGE AIR CIRCUIT

(30) Priorité: 22.05.2013 FR 1354565
(43) Date de publication de la demande: 30.03.2016
(73) Titulaire: Valeo Systemes Thermiques, 78320 Le Mesnil Saint Denis (FR)
(72) Inventeur: AZZOUZ, Kamel, F-75012 Paris (FR); DE PELSEMAEKER, Georges, F-78125 Poigny-la-foret (FR)
(74) Mandataire: Metz, Gaëlle
(86) Numéro de dépôt international: PCT/EP2014/060030
(87) Numéro de publication internationale: WO 2014/187735

(56) Documents cités:
- EP-A2- 2 275 654
- DE-A1- 3 200 683
- DE-A1- 3 200 685
- DE-A1- 3 200 689
- DE-A1-102005 035 017

## Description

La présente invention concerne un système de gestion thermique d'un circuit d'air de suralimentation, notamment pour véhicule automobile. Plus particulièrement, l'invention traite du refroidissement de l'air issue d'un turbocompresseur avant son admission dans les cylindres de combustion d'un moteur à explosion.

Dans le domaine automobile des moteurs suralimentés, il est connu de refroidir l'air d'admission, issue d'au moins un turbocompresseur, au moyen d'au moins un refroidisseur d'air de suralimentation (RAS) placé en amont des cylindres de combustion. Le RAS permet ainsi une diminution de la température d'air de suralimentation qui est à une température élevée en sortie du turbocompresseur. En effet, dans le circuit classique de suralimentation, l'air de suralimentation subit une compression au niveau du turbocompresseur, augmentant de fait sa température et diminuant sa densité. L'abaissement de la température d'air d'admission permet de réduire les risques d'auto-allumage et permet d'améliorer la densité de l'air de suralimentation, ce qui accroit le rendement de combustion.

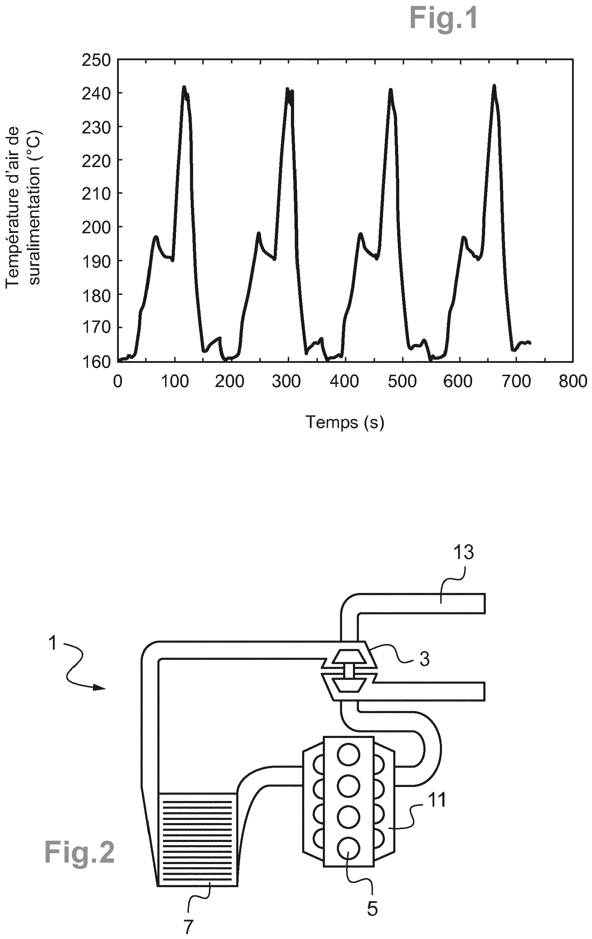

Les RAS sont généralement des échangeurs de chaleur de types air/air ou encore air/liquide qui subissent des contraintes importantes, notamment d'un point de vue thermique du fait de l'utilisation cyclique du turbocompresseur en fonction du régime moteur. En effet, à chaque utilisation du turbocompresseur, l'air de suralimentation augmente en pression et en température. Les augmentations de température de l'air de suralimentation, liées à l'utilisation du turbocompresseur, sont illustrées par la figure 1. Cette figure 1 montre une courbe de température de l'air de suralimentation en sortie du turbocompresseur en fonction du temps. Il est ainsi possible d'observer des pics de température de l'air de suralimentation pouvant monter jusqu'à 240 °C lors de l'utilisation du turbocompresseur.

Ces augmentations de température importantes imposent donc l'utilisation de matériaux résistant à ces hautes températures, la mise en oeuvre d'épaisseurs de matière conséquentes pour la tenue mécanique des éléments et également l'utilisation de RAS de grandes tailles afin de gérer ces hautes températures.

Il est connu de mettre en série deux RAS de plus petite tailles afin de limiter l'encombrement et de les placer dans les espaces disponibles du compartiment moteur. Cependant, cette solution n'est pas satisfaisante car la diminution de l'encombrement est limitée et la multiplication de RAS peut entrainer des surcouts de fabrication.

Il est également connu de placer un matériau à changement de phase au sein de la conduite entre le turbocompresseur et le RAS. Cependant cette intégration nécessite des modifications de la conduite en question pour qu'elle puisse accueillir le matériau à changement de phase et donc cela peut également entrainer des surcouts de fabrication.

DE3200683A1 divulgue un refroidisseur d'air de suralimentation comportant des réservoirs dans lesquels un matériau à changement de phase est stocké. Un des buts de l'invention est donc de remédier au moins partiellement aux inconvénients de l'art antérieur et de proposer un refroidisseur d'air de suralimentation ainsi qu'un circuit d'air de suralimentation optimisés.

La présente invention concerne donc un refroidisseur d'air de suralimentation selon l'objet de la revendication indépendante 1. Le matériau à changement de phase permet une absorption d'énergie calorifique en provenance de l'air de suralimentation. Cette énergie calorifique absorbée par le matériau à changement de phase n'est plus à dissiper par le refroidisseur d'air de suralimentation lors des pics de températures et donc ce dernier peut avoir un dimensionnement inférieur pour une efficacité identique.

Selon un aspect de l'invention, le matériau à changement de phase est incorporé à l'intérieur de la paroi de la boîte d'entrée et/ou de la boîte de sortie d'air de suralimentation.

Selon un autre aspect de l'invention, le matériau à changement de phase est sous la forme de capsules de matériau à changement de phase placées dans la boîte d'entrée et/ou la boîte de sortie d'air de suralimentation.

L'incorporation du matériau à changement de phase au sein de la au moins une boîte d'entrée et/ou la au moins une boîte de sortie du premier fluide caloporteur permet d'éviter une augmentation de la taille du refroidisseur d'air de suralimentation.

Selon un autre aspect de l'invention, la boîte d'entrée et/ou la boîte de sortie d'air de suralimentation comportant les capsules de matériau à changement de phase, comporte des moyens de retenue desdites capsules de matériau à changement de phase au sein de ladite boîte d'entrée et/ou de ladite boîte de sortie d'air de suralimentation.

Selon un autre aspect de l'invention, les moyens de retenue sont placés aux entrées et/ou sorties des surfaces d'échanges et à l'entrée de la boîte d'entrée d'air de suralimentation et/ou à la sortie de la boîte de sortie d'air de suralimentation.

Selon un autre aspect de l'invention, les moyens de retenue desdites capsules de matériau à changement de phase au sein de la boîte d'entrée et/ou de la boîte de sortie d'air de suralimentation, sont des grilles.

Selon un autre aspect de l'invention, les moyens de retenue desdites capsules de matériau à changement de phase au sein de la boîte d'entrée et/ou de la boîte de sortie d'air de suralimentation, sont des filtres.

Selon un autre aspect de l'invention, le matériau à changement de phase a une température de changement de phase comprise entre 180°C et 200°C.

Selon un autre aspect de l'invention, le matériau à changement de phase a une chaleur latente supérieure ou égale à 280 kJ/m³.

La présente invention concerne également un circuit d'air de suralimentation comportant un refroidisseur d'air de suralimentation comme décrit précédemment.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une courbe de température de l'air de suralimentation en fonction du temps, en sortie de turbocompresseur,
- la figure 2 montre une représentation schématique d'un circuit d'air de suralimentation,
- la figure 3 montre une représentation schématique en coupe d'un refroidisseur d'air de suralimentation,
- la figure 4 montre une représentation schématique en perspective éclatée d'un refroidisseur d'air de suralimentation,
- la figure 5 montre une courbe de l'évolution de la température d'air de suralimentation en sortie de différents types de refroidisseurs d'air de suralimentation.

Sur les différentes figures, les éléments identiques portent les mêmes numéros de référence.

La figure 2 montre une représentation schématique d'un circuit d'air de suralimentation 1. Ledit circuit d'air de suralimentation 1 comprend un turbocompresseur 3 qui, sous l'action des gaz d'échappement recueillis en sortie du collecteur d'échappement 11, comprime l'air destinée aux cylindres de combustion 5, recueilli par l'admission d'air 13. L'air de suralimentation ainsi crée passe alors dans un refroidisseur d'air de suralimentation (RAS) 7 placé entre le turbocompresseur 3 et les cylindres de combustion 5.

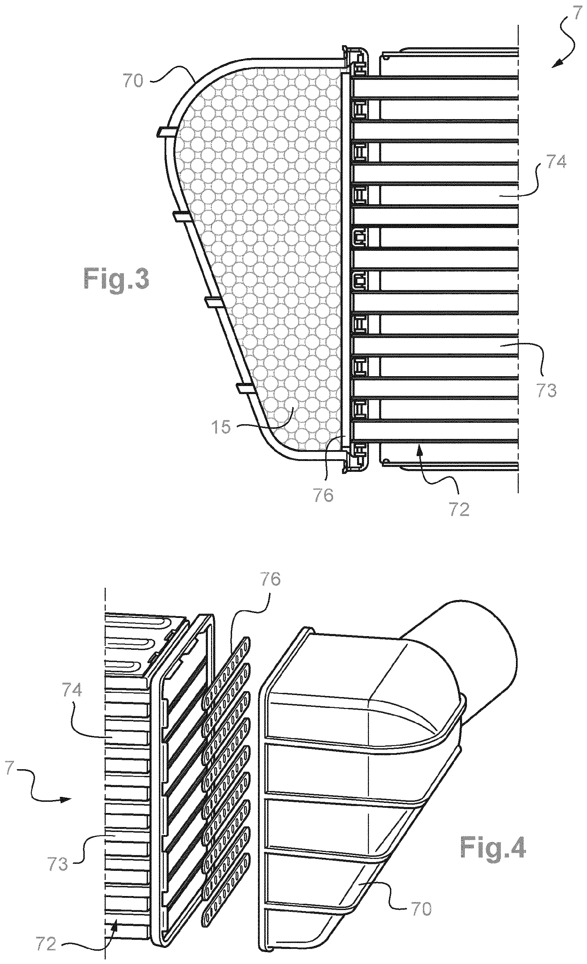

Comme le montre les figures 3 et 4, le RAS 7 comporte une boîte d'entrée 70 d'air de suralimentation dans laquelle arrive l'air de suralimentation pour être distribuée entre des surfaces d'échanges thermique 72 entre ledit air de suralimentation et un second fluide caloporteur. Le RAS 7 comporte également en sortie des surfaces d'échange thermique 72 une boîte de sortie (non représentée) d'air de suralimentation qui collecte l'air refroidit venant des surfaces d'échange thermiques 72 et le guide vers une conduite le conduisant au niveau des cylindres de combustion 5. Le second fluide caloporteur peut par exemple être de l'air dans le cas d'un RAS à air ou de l'eau glycolée dans le cas d'un RAS à eau.

Les surfaces d'échanges 72 peuvent par exemple être des tubes plats dans lesquels circule le second fluide caloporteur et entre lesquels passe l'air de suralimentation.

Le RAS 7 peut également être un échangeur à plaque. C'est-à-dire que les surfaces d'échange thermique 72 entre l'air de suralimentation et le second fluide caloporteur peuvent être un empilement de plaques d'échange 74 communicantes, dans lesquelles circule le second fluide caloporteur entre une entrée et une sortie de fluide. L'air de suralimentation circule alors dans l'espace 73 entre lesdites plaques d'échange 74 et peut échanger de l'énergie calorifique avec le second fluide caloporteur.

Les entrée et sortie du second fluide caloporteur, par exemple de l'eau glycolée, peuvent être reliées à un circuit de régulation de température dit basse température comme par exemple le circuit de climatisation.

Le RAS 7 comporte également au sein de sa boîte d'entrée 70 et/ou de sa boîte de sortie d'air de suralimentation un matériau à changement de phase (MCP) 15. Le MCP 15 permet une absorption d'énergie calorifique en provenance de l'air de suralimentation. Cette énergie calorifique absorbée par le MCP 15 n'est plus à dissiper par le RAS 7 lors des pics de températures. L'incorporation du MCP 15 au sein de la boîte d'entrée 70 et/ou la boîte de sortie du premier fluide caloporteur permet ainsi d'éviter une augmentation de la taille du RAS 7.

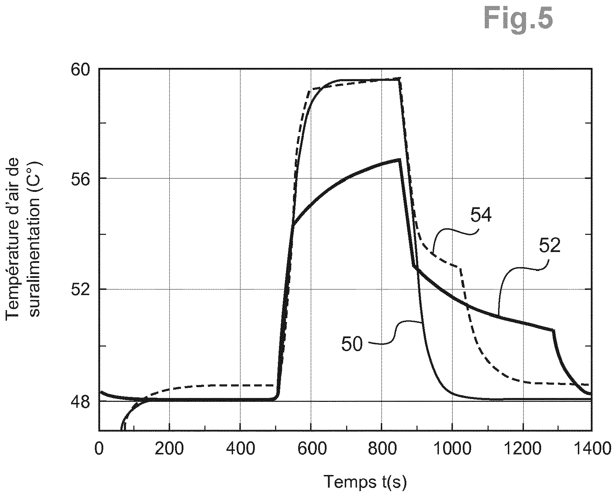

Cela est particulièrement montré par la figure 5 montrant un graphique de l'évolution de la température d'air en sortie de RAS 7 en fonction du temps et en fonction de divers types de RAS 7.

La première courbe 50 montre l'évolution de la température d'air en sortie d'un RAS classique de l'état de la technique en fonction du temps. On remarque quatre zones particulières dans la courbe de température :
- Une zone de température stable de t=0s à t=500s où le turbo compresseur n'est pas en action et où la température d'air en sortie du RAS est constante, dans les conditions du test, cette valeur est de l'ordre de 48°. Cette valeur de température est bien entendu variable en fonction des conditions de températures extérieures et de la température d'air d'admission. Ainsi en condition climatique froide cette valeur peut être inférieure.
- Une zone d'augmentation brutale de la température entre t=500s et t=600s correspondant à la mise en action du turbocompresseur 3 qui envoi un air de suralimentation chaud et comprimé au RAS.
- Une zone de stabilisation de la température d'air de suralimentation à une valeur de l'ordre de 60°C entre t=600s et t=850s, ce qui correspond aux effets de l'action du RAS par dissipation d'énergie calorifique de l'air de suralimentation. Cette valeur de température est bien sur fonction de l'efficacité du RAS utilisé.
- Une zone entre t=850s et t=1000s, de retour à une température stable de la température d'air en sortie du RAS identique à celle de la première zone du fait de l'arrêt du turbocompresseur 3.

La seconde courbe 52 correspond quant à elle à l'évolution de la température d'air en sortie d'un RAS 7 de dimension identique au précédent et comportant un MCP 15. On retrouve les mêmes zones particulières à quelques différences :
- La zone de stabilisation se fait à une température plus faible, de l'ordre de 54 à 57°C du fait de l'action du MCP 15 qui absorbe de l'énergie calorifique.
- La zone de retour à une température stable de la température d'air après l'arrêt du turbocompresseur 3 est plus longue et progressive, de t=850s à t=1400s, du fait de la dissipation progressive de l'énergie calorifique absorbée par le MCP 15.

La troisième courbe 54 correspond à l'évolution de la température d'air en sortie d'un RAS 7 comportant un MCP 15 mais de dimension inférieur de l'ordre de 30% aux RAS précédents. L'on remarque alors que :
- La zone de stabilisation est identique à celle du RAS sans MCP 15.
- La zone de retour à une température stable de la température d'air après l'arrêt du turbocompresseur 3 est également progressive, entre T=850s et T=1100s, du fait de la dissipation progressive de l'énergie calorifique absorbée par le MCP 15.

L'on peut ainsi obtenir avec un RAS 7 de plus petite taille, une efficacité similaire grâce à l'apport d'un MCP 15.

Le MCP 15 peut par exemple être incorporé dans la paroi même de la boîte d'entrée et/ou la boîte de sortie d'air de suralimentation.

Le MCP 15 peut également être sous la forme de capsule de matériau à changement de phase recouvert d'une couche protectrice de matière polymère. Ce genre de capsule de MCP 15 est bien connu de l'homme du métier. Le MCP utilisé peut notamment être un MCP extrudé ou polymérisé, de forme aléatoire comme par exemple de forme sphérique, demi-sphérique ou de forme amorphe, recouvert d'une couche protectrice de matière polymère. Les capsules de MCP 15 ont de préférence un diamètre compris entre 0.5mm et 8mm.

Du fait des plages de température d'utilisation dans un circuit d'air de suralimentation 1, le MCP 15 utilisé peut notamment avoir une température de changement de phase comprise entre 180°C et 200°C. De plus, le MCP 15 utilisé peut avantageusement avoir une chaleur latente supérieure ou égale à 280kJ/m³ afin d'avoir une efficacité optimale.

Dans le cas où le MCP 15 est sous forme de capsules, comme illustré par les figures 3 et 4, la boîte d'entrée 70 et/ou la boîte de sortie d'air de suralimentation comportant les capsules de MCP 15, comporte des moyens de retenue 76 desdites capsules de matériau à changement de phase 15 au sein de ladite boîte d'entrée 70 et/ou de ladite boîte de sortie d'air de suralimentation.

Les moyens de retenue 76 sont placés de préférence aux entrées et/ou sorties des surfaces d'échanges 72 afin que les capsules de MCP 15 n'entrent pas entre ces dernières et ne bloquent ou gênent le flux d'air de suralimentation. Les moyens de retenue 76 sont également placés à l'entrée de la boîte d'entrée 70 d'air de suralimentation et/ou à la sortie de la boîte de sortie d'air de suralimentation afin que les capsulent ne s'échappent pas dans la conduite entre le RAS 7 et le turbocompresseur 3 ou vers les cylindres de combustion 5.

Les moyens de retenue 76 peuvent être par exemple des grilles de maille inférieure au diamètre des capsules de MCP 15 ou encore des filtres de type diffuseur poreux.

Au niveau des entrées et/ou sorties des surfaces d'échanges 72, les moyens de retenue 76 peuvent, selon un premier mode de réalisation montré sur la figure 3, couvrir la surface totale entre la boîte d'entrée 70 et/ou la boîte de sortie d'air de suralimentation avec les surfaces d'échange 72. Selon un second mode de réalisation montré sur la figure 4, les moyens de retenue 76 ne couvrent que les espaces 73 dans lesquels circulent l'air de suralimentation.

Ainsi, on voit bien que le refroidisseur d'air de suralimentation 7 selon l'invention permet un refroidissement de l'air de suralimentation amélioré du fait de la présence de matériau à changement de phase 15 en son sein. Le refroidisseur d'air de suralimentation 7 selon l'invention, à efficacité égale avec un refroidisseur d'air de suralimentation classique, peut ainsi être de plus faible dimension.

## Revendications

1. Refroidisseur d'air de suralimentation (7) destiné à être placé en amont des cylindres de combustion (5), ledit air de suralimentation provenant d'au moins un turbocompresseur (3) et destiné à être admis dans les cylindres de combustion (5) d'un moteur à explosion,
ledit refroidisseur d'air de suralimentation (7) comportant :
- des surfaces d'échange thermique (72) entre l'air de suralimentation et un fluide caloporteur,
- une boîte d'entrée (70) d'air de suralimentation configurée pour distribuer l'air de suralimentation entre les surfaces d'échanges thermique (72),
- une boîte de sortie d'air de suralimentation configurée pour :
∘ collecter l'air refroidi par les surfaces d'échange thermiques (72) et
∘ guider l'air refroidi vers une conduite le conduisant au niveau des cylindres de combustion (5),,
**caractérisé en ce qu'**au moins la boîte d'entrée (70) et/ou la boîte de sortie d'air de suralimentation comporte un matériau à changement de phase (15).

2. Refroidisseur d'air de suralimentation (7) selon la revendication précédente, **caractérisé en ce que** le matériau à changement de phase (15) est incorporé à l'intérieur de la paroi de la boîte d'entrée (70) et/ou de la boîte de sortie d'air de suralimentation.

3. Refroidisseur d'air de suralimentation (7) selon la revendication 1, **caractérisé en ce que** le matériau à changement de phase (15) est sous la forme de capsules de matériau à changement de phase (15) placées dans la boîte d'entrée (10) et/ou la boîte de sortie d'air de suralimentation.

4. Refroidisseur d'air de suralimentation (7) selon la revendication précédente, **caractérisé en ce que** la boîte d'entrée (70) et/ou la boîte de sortie d'air de suralimentation comportant les capsules de matériau à changement de phase (15), comporte des moyens de retenue (76) desdites capsules de matériau à changement de phase (15) au sein de ladite boîte d'entrée (70) et/ou de ladite boîte de sortie d'air de suralimentation.

5. Refroidisseur d'air de suralimentation (7) selon la revendication précédente, **caractérisé en ce que** les moyens de retenue (76) sont placés aux entrées et/ou sorties des surfaces d'échanges (72) et à l'entrée de la boîte d'entrée (70) d'air de suralimentation et/ou à la sortie de la boîte de sortie d'air de suralimentation.

6. Refroidisseur d'air de suralimentation (7) selon l'une des revendications 4 ou 5, **caractérisé en ce que** les moyens de retenue (76) desdites capsules de matériau à changement de phase (15) au sein de la boîte d'entrée (70) et/ou de la boîte de sortie d'air de suralimentation, sont des grilles.

7. Refroidisseur d'air de suralimentation (7) selon l'une des revendications 4 ou 5, **caractérisé en ce que** les moyens de retenue (76) desdites capsules de matériau à changement de phase (15) au sein de la boîte d'entrée (70) et/ou de la boîte de sortie d'air de suralimentation, sont des filtres.

8. Refroidisseur d'air de suralimentation (7) selon l'une des revendications précédentes, **caractérisé en ce que** le matériau à changement de phase (15) a une température de changement de phase comprise entre 180°C et 200°C.

9. Refroidisseur d'air de suralimentation (7) selon l'une des revendications précédentes, **caractérisé en ce que** le matériau à changement de phase (15) a une chaleur latente supérieure ou égale à 280kJ/m³.

10. Circuit d'air de suralimentation (1) comportant un refroidisseur d'air de suralimentation (7) selon l'une quelconques des revendications 1 à 9.

## Patentansprüche

1. Ladeluftkühler (7), ausgebildet, um stromaufwärts von den Verbrennungszylindern (5) angeordnet zu werden, wobei die Ladeluft von wenigstens einem Turbolader (3) stammt und ausgebildet ist, den Verbrennungszylindern (5) eines Verbrennungsmotors zugeführt zu werden,
wobei der Ladeluftkühler (7) umfasst:
- Wärmetauscherflächen (72) zwischen der Ladeluft und einem flüssigen Wärmeträger,
- ein zum Verteilen der Ladeluft zwischen den Wärmetauscherflächen (72) ausgebildetes Eintrittsgehäuse (70) für die Ladeluft,
- ein Austrittsgehäuse für die Ladeluft, ausgebildet zum:
∘ Sammeln der von den Wärmetauscherflächen (72) gekühlten Luft und
∘ Führen der gekühlten Luft zu einer Leitung, die diese zu den Verbrennungszylindern (5) leitet,
**dadurch gekennzeichnet, dass** wenigstens das Eintrittsgehäuse (70) und/oder das Austrittsgehäuse für die Ladeluft ein Material mit Zustandsänderung (15) umfassen.

2. Ladeluftkühler (7) nach dem vorhergehenden Anspruch, **dadurch gekennzeichnet, dass** das Material mit Zustandsänderung (15) im Inneren der Wand des Eintrittsgehäuses (70) und/oder des Austrittsgehäuses für die Ladeluft integriert ist.

3. Ladeluftkühler (7) nach Anspruch 1, **dadurch gekennzeichnet, dass** das Material mit Zustandsänderung (15) in der Form von Kapseln aus Material mit Zustandsänderung (15), angeordnet im Eintrittsgehäuse (10) und/oder Austrittsgehäuse für die Ladeluft, vorliegt.

4. Ladeluftkühler (7) nach dem vorhergehenden Anspruch, **dadurch gekennzeichnet, dass** das Eintrittsgehäuse (70) und/oder das Austrittsgehäuse für die Ladeluft, umfassend Kapseln aus Material mit Zustandsänderung (15), Haltemittel (76) für die Kapseln aus Material mit Zustandsänderung (15) im Eintrittsgehäuse (70) und/oder Austrittsgehäuse für die Ladeluft umfassen.

5. Ladeluftkühler (7) nach dem vorhergehenden Anspruch, **dadurch gekennzeichnet, dass** die Haltemittel (76) an den Eintritten und/oder Austritten der Tauscherflächen (72) und am Eintritt des Eintrittsgehäuses (70) für die Ladeluft und/oder am Austritt des Austrittsgehäuses für die Ladeluft angeordnet sind.

6. Ladeluftkühler (7) nach einem der Ansprüche 4 oder 5, **dadurch gekennzeichnet, dass** die Haltemittel (76) der Kapseln aus Material mit Zustandsänderung (15) im Eintrittsgehäuse (70) und/oder Austrittsgehäuse für die Ladeluft Gitter sind.

7. Ladeluftkühler (7) nach einem der Ansprüche 4 oder 5, **dadurch gekennzeichnet, dass** die Haltemittel (76) der Kapseln aus Material mit Zustandsänderung (15) im Eintrittsgehäuse (70) und/oder Austrittsgehäuse für die Ladeluft Filter sind.

8. Ladeluftkühler (7) nach einem der vorhergehenden Ansprüche, **dadurch gekennzeichnet, dass** das Material mit Zustandsänderung (15) eine Zustandsänderungstemperatur zwischen 180 und 200 °C aufweist.

9. Ladeluftkühler (7) nach einem der vorhergehenden Ansprüche, **dadurch gekennzeichnet, dass** das Material mit Zustandsänderung (15) eine latente Wärme größer gleich 280 kJ/m³ aufweist.

10. Ladeluftkreis (1), umfassend einen Ladeluftkühler (7) nach einem der Ansprüche 1 bis 9.

## Claims

1. Charge air cooler (7) intended to be placed upstream from the combustion cylinders (5), said charge air coming from at least one turbocharger (3) and intended to be supplied to the combustion cylinders (5) of an internal combustion engine,
said charge air cooler (7) comprising:
- heat-exchange surfaces (72) between the charge air and a heat transfer fluid,
- an inlet container (70) for charge air configured to distribute the charge air between the heat-exchange surfaces (72),
- an outlet container for charge air configured to :
° collect the air cooled by the heat-exchange surfaces (72), and
° guide the cooled air towards a conduit directing it to the level of the combustion cylinders (5),
**characterized in that** at least the inlet container (70) and/or the outlet container for charge air comprises a phase change material (15).

2. Charge air cooler (7) according to the preceding claim, **characterized in that** the phase change material (15) is incorporated within the wall of the inlet container (70) and/or the outlet container for charge air.

3. Charge air cooler (7) according to Claim 1, **characterized in that** the phase change material (15) is in the form of capsules of phase change material (15) placed in the inlet container (70) and/or the outlet container for charge air.

4. Charge air cooler (7) according to the preceding claim, **characterized in that** the inlet container (70) and/or the outlet container for charge air comprising the capsules of phase change material (15) comprises means (76) for retaining said capsules of phase change material (15) within said inlet container (70) and/or said outlet container for charge air.

5. Charge air cooler (7) according to the preceding claim, **characterized in that** the retaining means (76) are placed at the inlets and/or outlets of the exchange surfaces (72) and at the inlet of the inlet container (70) for charge air and/or at the outlet of the outlet container for charge air.

6. Charge air cooler (7) according to either of Claims 4 and 5, **characterized in that** the means (76) for retaining said capsules of phase change material (15) within the inlet container (70) and/or the outlet container for charge air are grids.

7. Charge air cooler (7) according to either of Claims 4 and 5, **characterized in that** the means (76) for retaining said capsules of phase change material (15) within the inlet container (70) and/or the outlet container for charge air are filters.

8. Charge air cooler (7) according to one of the preceding claims, **characterized in that** the phase change material (15) has a phase change temperature of between 180°C and 200°C.

9. Charge air cooler (7) according to one of the preceding claims, **characterized in that** the phase change material (15) has a latent heat greater than or equal to 280 kJ/m³.

10. Charge air circuit (1) comprising a charge air cooler (7) according to any one of Claims 1 to 9.
